# EUROPEAN PATENT APPLICATION

(11) **EP 4 670 493 A1**
(43) Date of publication of application: **31.12.2025**
(21) Application number: 24766696.9
(22) Date of filing: 23.01.2024
(51) Int. Cl.: A01G 7/00

(54) **METHOD FOR UTILIZING POORLY-SOLUBLE PHOSPHORIC ACID AND METHOD FOR CULTIVATING PLANT BODIES**

(30) Priority: 09.03.2023 JP 2023036591
(71) Applicant: AQUASOLUTION Corporation, Tomi-shi Nagano 389-0514 (JP)
(72) Inventor: TANAKA, Hiroyuki, Tokyo 102-0084 (JP); OKUYAMA,Yuichi, Tokyo 102-0084 (JP)
(74) Representative: Dunleavy, Christopher Squire
(86) International application number: PCT/JP2024/001861
(87) International publication number: WO 2024/185321

(57) **Abstract**

The present invention aims at providing a method of utilizing poorly-soluble phosphoric acid, the method being capable of easily recycling poorly-soluble phosphoric acid in soil. The present invention is a method of utilizing poorly-soluble phosphoric acid, the method effectively utilizing poorly-soluble phosphoric acid in soil, characterized in that nanobubble water is sprayed over soil containing poorly-soluble phosphoric acid to generate phosphate ions from the poorly-soluble phosphoric acid by means of the nanobubble water.

## Description

### TECHNICAL FIELD

The present invention relates to a method of utilizing poorly-soluble phosphoric acid and a method of cultivating a plant.

### BACKGROUND ART

Nitrogen, phosphoric acid and potassium are called three elements of fertilizer components and are essential to the growth of a plant.

Since phosphoric acid does not exist in nature, when it is used as a fertilizer, it is necessary to apply phosphoric acid to soil in an amount required for the growth of a plant. Examples of the phosphoric acid fertilizer include an organic fertilizer such as compost and a chemical fertilizer such as calcium superphosphate.

Part of phosphoric acid applied to soil as a fertilizer is absorbed by a plant. On the other hand, after the plant is cultivated or harvested in the above-mentioned soil, the phosphoric acid that has not been absorbed by the plant remains in the soil, and the phosphoric acid that remains in the soil is immobilized by being bonded to aluminum or iron. Since the phosphoric acid bonded to aluminum or iron becomes poorly-soluble phosphoric acid that is insoluble in water, even when the next plant is cultivated in the same place (soil), the plant hardly absorbs the poorly-soluble phosphoric acid. Therefore, the poorly-soluble phosphoric acid remaining in the soil is immobilized and accumulated in the soil. Furthermore, also by applying an excess amount of phosphoric acid to the soil, poorly-soluble phosphoric acid accumulates in the soil.

In view of the present situation as described above, and furthermore, from the viewpoints that phosphorus (phosphorus ore), which is a raw material of phosphoric acid, is a finite resource in its reserves, and also for the reasons of the rise in prices of phosphorus chemical fertilizers in recent years, restrictions on future imports, and other factors, a recycling technology for poorly-soluble phosphoric acid in soil is required.

Addressing such problems, for example, Patent Literature 1 describes a solubilizing agent for non-absorbable phosphoric acid in soil, the solubilizing agent being applied to soil in which immobilized non-absorbable phosphoric acid is accumulated and having, as an essential ingredient, pyroligneous acid with a pH and other parameters within specific ranges (claim 1).

### CITATION LIST

### PATENT LITERATURE

Patent Literature 1: JP 03-188190 A

### SUMMARY OF INVENTION

### TECHNICAL PROBLEMS

The present inventors have studied the solubilizing agent described in Patent Literature 1 and considered that the above-mentioned solubilizing agent cannot be easily used because the above-mentioned pyroligneous acid is complicated to prepare.

Accordingly, an object of the present invention is to provide a method of utilizing poorly-soluble phosphoric acid and a method of cultivating a plant, which are capable of easily recycling poorly-soluble phosphoric acid in soil.

### SOLUTION TO PROBLEMS

The present inventors have conducted an intensive study to attain the above-described object and found that when nanobubble water is sprayed over soil containing poorly-soluble phosphoric acid to generate phosphate ions from the poorly-soluble phosphoric acid by the nanobubble water, it is possible to easily recycle (effectively utilize) the poorly-soluble phosphoric acid in the soil, whereby the present invention has been completed.

That is, the present inventors found that the above-described object can be attained by the following constitution.

[1] A method of utilizing poorly-soluble phosphoric acid, the method effectively utilizing poorly-soluble phosphoric acid in soil, characterized in that
   nanobubble water is sprayed over soil containing poorly-soluble phosphoric acid to generate phosphate ions from the poorly-soluble phosphoric acid by means of the nanobubble water.
[2] The method of utilizing poorly-soluble phosphoric acid according to [1], wherein the soil further contains an iron component and/or an aluminum component.
[3] The method of utilizing poorly-soluble phosphoric acid according to [1], wherein the poorly-soluble phosphoric acid contains iron phosphate.
[4] The method of utilizing poorly-soluble phosphoric acid according to any one of [1] to [3], wherein the nanobubble water contains bubbles with a modal particle size of from 10 to 500 nm.
[5] The method of utilizing poorly-soluble phosphoric acid according to any one of [1] to [4], wherein bubbles contained in the nanobubble water include at least one type of gas selected from the group consisting of air, oxygen, nitrogen, carbon dioxide, hydrogen and ozone,
   where including oxygen, nitrogen, carbon dioxide or hydrogen means including oxygen, nitrogen, carbon dioxide or hydrogen at a higher concentration than the concentration in air.
[6] The method of utilizing poorly-soluble phosphoric acid according to any one of [1] to [5], wherein the nanobubble water contains bubbles in an amount of from 1 x 10⁸ to 1 x 10¹⁰ bubbles/mL.
[7] The method of utilizing poorly-soluble phosphoric acid according to any one of [1] to [6], wherein the nanobubble water contains bubbles with a zeta potential of -50 mV to -30 mV.
[8] The method of utilizing poorly-soluble phosphoric acid according to any one of [1] to [7], wherein the nanobubble water is sprayed over the soil a plurality of times.
[9] A method of cultivating a plant, comprising: cultivating a plant in soil to which the method of utilizing poorly-soluble phosphoric acid according to any one of [1] to [8] is applied.

### ADVANTAGEOUS EFFECTS OF INVENTION

The method of utilizing poorly-soluble phosphoric acid according to the present invention makes it possible to easily recycle poorly-soluble phosphoric acid in soil.

In addition, the present invention makes it possible to provide the method of cultivating a plant.

### BRIEF DESCRIPTION OF DRAWINGS

[FIG. 1] FIG. 1 is a schematic view showing an example of a nanobubble generating apparatus.
[FIG. 2] FIG. 2 is a graph showing dissolution characteristics of a calcium component in soil.
[FIG. 3] FIG. 3 is a graph showing dissolution characteristics of an aluminum component in soil.
[FIG. 4] FIG. 4 is a graph showing measurement results of amounts (concentrations) of phosphate ions having been changed into an available form from poorly-soluble phosphoric acid in soil after well water or nanobubble water was sprayed over the soil where no plant is planted.

### DESCRIPTION OF EMBODIMENTS

The present invention is described below in detail.

While the constitutional requirements may be described below based on a typical embodiment of the present invention, the present invention is not limited to the embodiment.

In the description, a numerical range indicated using the form of "(from)... to..." should read as a range including the former number as the lower limit value and the latter number as the upper limit value.

### [Method of utilizing poorly-soluble phosphoric acid]

The method of utilizing poorly-soluble phosphoric acid (hereinafter also referred to as "the utilizing method of the present invention") is a method of utilizing poorly-soluble phosphoric acid, the method effectively utilizing poorly-soluble phosphoric acid in soil, characterized in that nanobubble water is sprayed over soil containing poorly-soluble phosphoric acid to generate phosphate ions from the poorly-soluble phosphoric acid by means of the nanobubble water.

While the reasons why the utilizing method of the present invention makes it possible to easily recycle poorly-soluble phosphoric acid in soil are not clear, in the example (which will be described later) of the present invention, the following result was obtained; when the amount of available phosphoric acid (i.e., phosphate ions) extracted from soil (available phosphoric acid extraction amount) before planting of plants is taken as a reference, this amount was greatly reduced after harvesting of plants as compared to the above-mentioned reference, and the amount of the available phosphoric acid extracted from the soil during cultivation of the plants was increased.

From the above result, the following mechanism can be inferred: in the present invention, nanobubble water can directly act on poorly-soluble phosphoric acid in soil to generate phosphate ions from the poorly-soluble phosphoric acid.

Further, although it cannot be said that there is no effect from the plants or the like because the plants were cultivated in the soil in the example to be described later, the above result shown in the example to be described later (in particular, the great reduction in the available phosphoric acid extraction amount after harvesting compared to that before planting) was found to be a surprising phenomenon.

It should be noted that the present invention is not limited to the above-described mechanism. Mechanisms other than that described above are also included in the scope of the present invention.

Nanobubble water and optional components used in the utilizing method of the present invention will be described below in detail.

### [Nanobubble water]

Nanobubble water used in the utilizing method of the present invention is water which contains bubbles having a diameter of less than 1 µm and into which the bubbles are incorporated. The expression "water into which the bubbles are incorporated" intends to exclude water containing the bubbles that are inevitably contained due to, for example, water (such as well water containing impurities) used to generate nanobubble water.

The diameter (particle size) of bubbles contained in nanobubble water, as well as the modal particle size of bubbles and the number of bubbles to be described later are the values that are measured using the nanoparticle tracking analysis of the Brownian motion-moving speed of bubbles in water. In the present description, numeral values measured by the nanoparticle analysis system, NanoSight series (manufactured by NanoSight Ltd.) are used.

The nanoparticle analysis system, NanoSight series (manufactured by NanoSight Ltd.) can measure the Brownian motion speed of particles and calculate the diameter (particle size) based on the measured speed. The modal particle size can be determined as the mode diameter from the particle size distribution of the existing nanoparticles.

In the present invention, the modal particle size of bubbles contained in the nanobubble water is preferably from 10 to 500 nm, more preferably from 30 to 300 nm, and even more preferably from 70 to 130 nm, because poorly-soluble phosphoric acid can be recycled easily and effectively.

Gas constituting bubbles contained in the nanobubble water is not particularly limited, and from the viewpoint of a longtime existence of bubbles in water, specific examples of the gas include air, oxygen, nitrogen, fluorine, carbon dioxide, hydrogen and ozone.

Among these, it is preferable to contain at least one type of gas selected from the group consisting of air, oxygen, nitrogen, carbon dioxide, hydrogen and ozone because poorly-soluble phosphoric acid can be recycled easily and effectively. In particular, it is more preferable to contain oxygen because the bubbles can exist for a longer period of time.

Here, "containing oxygen" (in the case where bubbles contained in nanobubble water contains oxygen as gas) means that bubbles contained in the nanobubble water contain oxygen in the above-described bubbles at a higher concentration than the oxygen concentration in air. The same applies to nitrogen, carbon dioxide, and hydrogen. The oxygen concentration is preferably not less than 30 vol% of the bubbles, and preferably more than 50 vol% and not more than 100 vol%.

The nanobubble water contains bubbles in an amount of preferably from 1 x 10⁸ to 1 x 10¹⁰ bubbles/mL because poorly-soluble phosphoric acid can be recycled easily and effectively, more preferably more than 1 x 10⁸ bubbles/mL and less than 1 x 10¹⁰ bubbles/mL because the bubble generation time and the bubble existence are particularly well balanced, and even more preferably from 5 x 10⁸ to 5 x 10⁹ bubbles/mL because poorly-soluble phosphoric acid can be recycled further effectively.

The zeta potential of bubbles contained in the nanobubble water is preferably a negative value and more preferably a potential of not more than -20 mV because poorly-soluble phosphoric acid can be recycled easily and effectively, and even more preferably -50 mV to -30 mV for the purpose of, in addition to the above reason, increasing the effect of controlling damage caused by diseases or pests. The value of zeta potential is known to vary depending on the type of bubbles, and it is further preferable that the zeta potential be lower (on a more negative side) than the zeta potential of bubbles constituted of air. The zeta potential is measured by, for instance, microscopic electrophoresis and can be measured with a known zeta potential measurement device employing this method (one example of such a measurement device is "Zeta View" manufactured by MicrotracBEL Corp.).

Exemplary methods of generating the nanobubble water include a static mixer method, a venturi method, a cavitation method, a vapor condensation method, an ultrasonic method, a swirling flow method, a pressurized dissolution method and a fine pore method.

The utilizing method of the present invention may include a generation step of generating the nanobubble water prior to spraying of the nanobubble water. That is, the utilizing method of the present invention may be a utilizing method including, for example, a generation step of introducing water from a water source such as a water storage tank, a well or agricultural water into a nanobubble generating apparatus to generate nanobubble water, and a spraying step of spraying the generated nanobubble water. Exemplary techniques of introducing water from a water source into a nanobubble generating apparatus include a technique in which water is drawn from a water source using a tub, a pump or another device and supplied to the nanobubble generating apparatus, and a technique in which water is directly supplied to the nanobubble generating apparatus from a flow path that is installed between a water source and the nanobubble generating apparatus and connected to the nanobubble generating apparatus.

As the method of generating the nanobubble water, a generation method using an apparatus that does not intentionally generate a radical is preferred, and a specific example thereof is a generation method using, for instance, the nanobubble generating apparatus described in paragraphs [0080] to [0100] of JP 2018-15715 A. The contents of the above reference are incorporated in the present description.

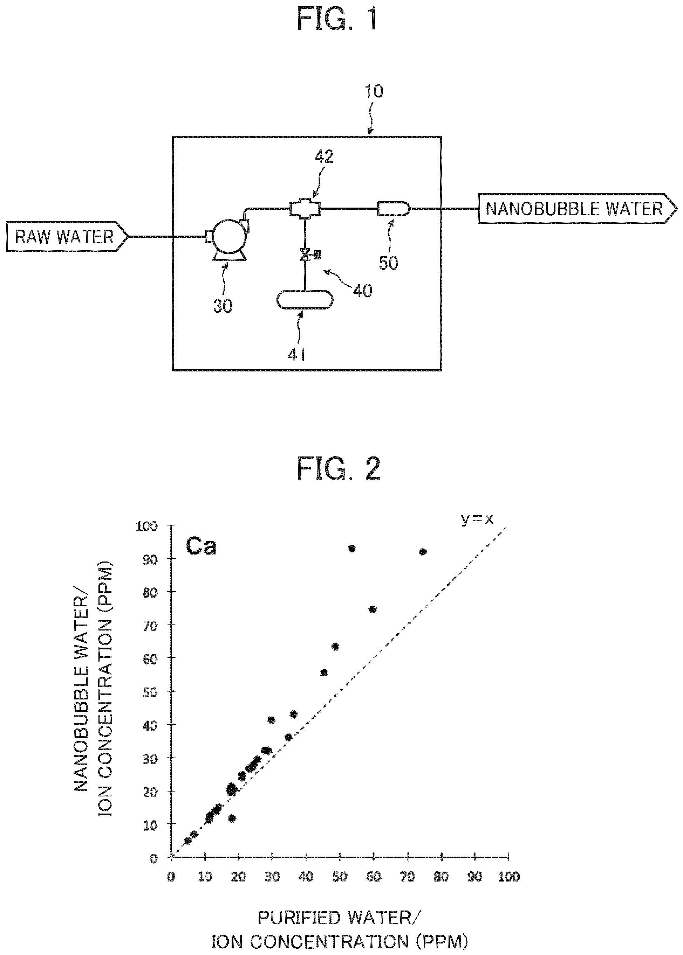

Another example of the nanobubble generating apparatus that does not intentionally generate a radical is an ultrafine bubble generating apparatus including a liquid discharger that discharges water, a gas incorporating device that pressurizes gas and incorporates the gas into the water discharged from the liquid discharger, and an ultrafine bubble generator that allows the water having the gas incorporated therein to pass through an inside of the ultrafine bubble generator to generate ultrafine bubbles in the water, wherein, between the liquid discharger and the ultrafine bubble generator, the gas incorporating device pressurizes gas and incorporates the gas into a liquid being in a pressurized state flowing toward the ultrafine bubble generator. Specifically, a generation method using a nanobubble generating apparatus shown in FIG. 1 is exemplified.

A nanobubble generating apparatus 10 shown in FIG. 1 includes therein a liquid discharger 30, a gas incorporating device 40 and a nanobubble generating nozzle 50.

The liquid discharger 30 comprising a pump draws raw water of nanobubble water (e.g., well water) therein and discharges the raw water. The gas incorporating device 40 includes a vessel 41 in which compressed gas is enclosed, and a substantially cylindrical gas incorporating device body 42. The gas incorporating device 40 introduces the compressed gas in the vessel 41 into the gas incorporating device body 42 while allowing the water discharged from the liquid discharger 30 to flow inside the gas incorporating device body 42. Consequently, gas-incorporated water is generated in the gas incorporating device body 42.

The nanobubble generating nozzle 50 is to generate nanobubbles in the gas-incorporated water according to the principle of pressurized dissolution when the gas-incorporated water passes through an inside of the nanobubble generating nozzle 50, and the structure thereof may be the same as the structure of the nanobubble generating nozzle described in JP 2018-15715 A. Nanobubble water generated in the nanobubble generating nozzle 50 is ejected from a tip end of the nanobubble generating nozzle 50, then flows out the nanobubble generating apparatus 10, and is delivered to a predetermined destination via a flow path that is not shown.

As described above, between the liquid discharger 30 and the nanobubble generating nozzle 50 in the nanobubble generating apparatus 10, the gas incorporating device 40 incorporates compressed gas into water (raw water) being in a pressurized state and flowing toward the nanobubble generating nozzle 50. Owing to this configuration, defects such as cavitation that may occur when gas is incorporated into water on the intake side (suction side) of the liquid discharger 30 can be avoided. Besides, since gas in a pressurized (compressed) state is incorporated into water, gas can be incorporated into water against the water pressure at the place where the gas is incorporated. Accordingly, gas can be appropriately incorporated into water without particularly generating a negative pressure at the place where the gas is incorporated.

In addition, the liquid discharger 30 is connected on the suction side thereof with the flow path of water supplied from a water source such as a well or a water tap, and the pressure of the water flowing from the upstream side of the liquid discharger 30 into the liquid discharger 30 in the flow path (i.e., the water pressure on the suction side) is preferably a positive pressure. When this is the case, the above-described configuration is more effective. More specifically, when the water pressure (the suction pressure) on the upstream side of the liquid discharger 30 is a positive pressure, gas is to be incorporated into water on the downstream side of the liquid discharger 30, and this further emphasizes the significance of the configuration of the nanobubble generating apparatus 10 capable of appropriately incorporating gas into water also on the downstream side of the liquid discharger 30.

Further, water used to generate the nanobubble water is not particularly limited, and use can be made of, for example, rainwater, tap water, well water, agricultural water and distilled water.

Such water may be water that has been subjected to another treatment before being used to generate nanobubble water. Another treatment may be exemplified by pH adjustment, precipitation, filtration, or disinfection (sterilization). In particular, when agricultural water is used, for instance, agricultural water that has been typically subjected to at least one of precipitation and filtration may be used.

In the present invention, a mode where the above-mentioned nanobubble water is sprayed over soil is not particularly limited. Examples thereof include a mode where the nanobubble water is sprinkled over soil in the soil culture, a mode where soil is supplied with a culture liquid diluted with the nanobubble water in the nutrient-solution soil culture (irrigation and fertilization culture), and a mode where the nanobubble water alone is sprinkled over soil (applied through irrigation) in the nutrient-solution soil culture.

Among these, the mode where the nanobubble water is sprinkled is preferred because the recycle of poorly-soluble phosphoric acid can be achieved more easily. The method of "sprinkling", which is a mode of spraying, is not particularly limited.

When a plant is cultivated in the soil to which the utilizing method of the present invention is applied, in spraying the nanobubble water over the soil, the nanobubble water may be sprayed also over the plant. The method of spraying the nanobubble water over the above-mentioned plant varies depending on the plant cultivating method and thus is not particularly limited, and when the culture method is the soil culture, for example, a method involving spraying water over an entire of a plant and a method involving spraying water over a part of a plant (e.g., stems or leaves) may be adopted. When the culture method is the nutrient-solution soil culture, either the irrigation and fertilization culture or the sprinkling of nanobubble water alone through irrigation may be carried out as described above.

### <Additional component>

The nanobubble water may further contain a component other than water and bubbles.

Examples of the additional components include an agrochemical, a fertilizer, a surfactant, an antifreezing agent, a defoaming agent, a preservative, an antioxidant and a thickening agent. The type and an amount of an additional component are not particularly limited and may be selected depending on the intended purpose.

Meanwhile, in the present invention, it is preferable that the additional component contains substantially no radical in the nanobubble water. "Containing substantially no radical" does not mean to exclude a case where a radical is inevitably contained due to water (e.g., well water containing impurities) used to generate the nanobubble water but means to exclude a case where a radical is generated and added through a certain operation.

### [Soil]

The soil used in the utilizing method of the present invention is soil containing poorly-soluble phosphoric acid.

The soil is not particularly limited as long as it contains poorly-soluble phosphoric acid.

According to the utilizing method of the present invention, phosphate ions can be produced from poorly-soluble phosphoric acid, and therefore, phosphoric acid need not be applied to soil containing poorly-soluble phosphoric acid. Alternatively, when phosphoric acid is applied to the soil, the application amount of phosphoric acid can be reduced compared to an amount normally used.

Examples of the soil include soil used for cultivating a plant, and specifically, examples of the soil include soil used in the soil culture or the nutrient-solution soil culture of a plant.

### [Poorly-soluble phosphoric acid]

In the present invention, the poorly-soluble phosphoric acid contained in soil is a phosphoric acid compound formed of a phosphate ion and a metal ion and has a property of being insoluble or poorly soluble in water.

Examples of the phosphate ion constituting the poorly-soluble phosphoric acid include H₂PO₄-, HPO₄²-, PO₄³-.

Examples of the metal ion constituting the poorly-soluble phosphoric acid include an aluminum ion, an iron ion, a magnesium ion, and a calcium ion.

Examples of the poorly-soluble phosphoric acid (non-available phosphoric acid) include aluminum phosphate, iron phosphate, magnesium phosphate, and calcium phosphate.

In general, it is said that poorly-soluble phosphoric acid is more poorly soluble (difficult to be ionized) in water (excluding nanobubble water) in the order of calcium phosphate, iron phosphate, and aluminum phosphate (one listed later being more poorly soluble than one listed before).

It is said that poorly-soluble phosphoric acid (e.g., aluminum phosphate, iron phosphate, magnesium phosphate, calcium phosphate) is ionized by, for example, acid (root acid) secreted from a root of a plant, and a phosphate ion thus generated from the poorly-soluble phosphoric acid due to the root acid as described above can be absorbed by a plant. Among them, it is said that calcium phosphate is easily ionized by a root acid.

Phosphoric acid bonded to aluminum or iron is hardly absorbed and utilized because it is insoluble in water.

In volcanic ash soils such as red soil, phosphoric acid is bonded to iron, aluminum, and the like to be insoluble in water, so that plants cannot utilize the phosphoric acid. Andosol is generally soil that mainly contains volcanic ash and humic soil.

### (Iron phosphate, calcium phosphate)

The poorly-soluble phosphoric acid preferably contains iron phosphate and/or calcium phosphate because the poorly-soluble phosphoric acid can be easily and efficiently recycled.

Examples of the iron phosphate include iron (III) phosphate and iron (II) phosphate.

The calcium phosphate is not particularly limited as long as it is a salt composed of a calcium ion and the above-mentioned phosphate ion. Examples thereof include conventionally known ones.

Preferably, the soil further contains an iron component (excluding iron phosphate) and/or an aluminum component (excluding aluminum phosphate).

When the soil further contains an iron component (excluding iron phosphate), examples of the iron component include: iron compounds such as iron oxide and iron hydroxide; and iron.

In the case where the soil further contains an aluminum component (excluding aluminum phosphate), the nanobubble water in this case can be said to be one of preferred embodiments because the nanobubble water less easily generates aluminum ions from the aluminum component as compared to simple water, and therefore the generation of poorly-soluble phosphoric acid such as aluminum phosphate can be suppressed. It should be noted that simple water does not generate an aluminum ion or a phosphate ion from aluminum phosphate which is one aluminum component.

When the soil further contains an aluminum component (excluding aluminum phosphate), examples of the aluminum component include: aluminum compounds such as aluminum oxide and aluminum hydroxide; and aluminum.

When the poorly-soluble phosphoric acid is generated in the soil is not particularly limited. For example, the poorly-soluble phosphoric acid contained in the soil may be poorly-soluble phosphoric acid that has been immobilized or accumulated in the soil after plants were harvested in the past or in the soil in which plants are currently being cultivated.

The soil may further include poorly-soluble phosphoric acid, the above-mentioned iron component, and a metal component other than the above-mentioned aluminum component.

### (Phosphoric acid)

Phosphoric acid as a fertilizer can be applied to the soil, for example, before the nanobubble water is sprayed. When phosphoric acid is not applied to the soil before the nanobubble water is sprayed, the phosphoric acid may be applied to the soil at the same time as or after the nanobubble water is sprayed. Alternatively, phosphoric acid may be applied to the soil before the next spraying of the nanobubble water.

In the case where the soil contains phosphoric acid as a fertilizer, this case is preferable from the viewpoint that since the phosphoric acid as a fertilizer may be ionized by the nanobubble water together with the ionization of the poorly-soluble phosphoric acid by the nanobubble water, the plant being cultivated can further absorb also phosphate ions generated from the phosphoric acid as a fertilizer owing to the nanobubble water.

### [Spraying]

In the utilizing method of the present invention, the method of spraying the nanobubble water over the soil is not particularly limited. Examples thereof include conventionally known methods.

According to the utilizing method of the present invention, phosphate ions can be generated from the poorly-soluble phosphoric acid by spraying the nanobubble water. In addition, since phosphate ions can be generated from the poorly-soluble phosphoric acid every time the nanobubble water is sprayed over the soil, when the nanobubble water is sprayed over the soil multiple times, the utilizing method of the present invention can be said to have a property (sustained releasability) of sustainedly releasing phosphate ions.

In the utilizing method of the present invention, the number of times of spraying the nanobubble water to the soil is not particularly limited as long as it is one or more times, but spraying the nanobubble water over the soil a plurality of times is one preferred embodiment because the poorly-soluble phosphoric acid can be easily and efficiently recycled and the sustained release property is excellent.

Further, when a plant is cultivated in the soil to which the utilizing method of the present invention is applied as described later, it is sufficient to spray the nanobubble water over the soil at least once, and spraying the nanobubble water over the soil a plurality of times in total before and after cultivating the plant is one preferred embodiment because the poorly-soluble phosphoric acid can be recycled easily and efficiently.

### [Plant]

When a plant is cultivated in the soil using the utilizing method of the present invention, the plant is not particularly limited and is preferably a plant that is artificially fed with a fertilizer for cultivation.

Examples of such a plant include: flowers and ornamental plants such as rose, alstroemeria, cyclamen, tulip, antirrhinum, dahlia, *Chrysanthemum morifolium,* gerbera and orchid;
fruit vegetables such as solanaceous plants (for example, eggplant, pepino, tomato (including grape tomato), tamarillo, *Capsicum annum,* shishito pepper, habanero, bell pepper, paprika and colored bell pepper), araliaceous plants (for example, *Gamblea innovans*), cucurbitaceous plants (for example, pumpkin, zucchini, cucumber, *Cucumis metuliferus, Cucumis melo var. conomon, Momordica charantia, Benincasa hispida,* chayote, *Luffa cylindrica,* calabash, watermelon, melon and *Cucumis melo var. makuwa*), malvaceae plants (for example, okra), and rosaceous plants (for example, strawberry);
stem and leaf vegetables such as cabbage, onion, green onion, Chinese cabbage, spinach, lettuce, broccoli, komatsuna (*Brassica rapa var*.), *Allium tuberosum,* asparagus, celery, garland chrysanthemum, cauliflower, garlic and *Allium chinense;*
root vegetables such as Japanese radish, carrot, burdock, turnip and lotus root; and
fruit trees such as citrus unshiu, apple, peach, nashi pear (*Pyrus pyrifolia*), pear, banana, grape, cherry, oleaster, rubus, blueberry, raspberry, blackberry, mulberry, loquat, fig, persimmon, *Akebia* quinata, mango, avocado, jujube, pomegranate, passion fruit, pineapple, banana, papaya, apricot, *Prunus mume,* plum, peach, kiwifruit, *Pseudocydonia sinensis, Myrica rubra,* chestnut, miracle fruit, guava, star fruit and acerola.

Among these, flowers and ornamental plants and stem and leaf vegetables are preferred because the utilizing method of the present invention exhibits the higher efficiency.

When the plant is cultivated in the soil using the utilizing method of the present invention, the time to apply the plant to the soil is not particularly limited. Examples include seeding and planting.

### [Method of cultivating plant]

The method of cultivating a plant according to the present invention (cultivating method of the present invention) is a method of cultivating a plant, in which the plant is cultivated in soil to which the method of utilizing poorly-soluble phosphoric acid according to the present invention is applied.

The soil used in the cultivating method of the present invention is not particularly limited as long as it is soil to which the method of utilizing poorly-soluble phosphoric acid according to the present invention is applied.

The plant used in the cultivating method of the present invention is not particularly limited. Examples thereof include the same ones as described above.

When the plant is cultivated in the soil to which the utilization method of the present invention is applied, the time to apply the plant to the soil is not particularly limited. For example, the time can be similar to the above-described ones.

When the plant is cultivated in the soil to which the utilization method of the present invention is applied, the time to spray the nanobubble water over the soil is not particularly limited. Examples of the above-described time include the time when the nanobubble water is sprayed over the soil before cultivation of the plant, the time when the nanobubble water is sprayed over the plant and/or the soil during cultivation of the plant, and a combination thereof. The method of spraying the nanobubble water on the plant and/or the soil is not particularly limited.

### [EXAMPLES]

The present invention is described below more specifically by way of examples. The materials, amounts of use, ratios, treatments and treatment procedures illustrated in the examples below may be modified as appropriate as long as they do not depart from the scope and spirit of the present invention. Therefore, the scope of the present invention should not be construed as being limited to the following examples.

### [Test]

### <Details of Test>

The test was carried out in greenhouses for chrysanthemum grown with artificial light, cultivated in Tahara-shi, Aichi, with the following separated areas.

### (Test area)

Regarding the test area (corresponding to the example of the present invention), in greenhouses in which 39,200 plants of chrysanthemum grown with artificial light (variety: Hillary, Leminus) were cultivated from December 24, 2021 (planting day) to March 30, 2022 (harvesting day), the nanobubble water generated by the following method was sprayed over soil and stems and leaves with sprinklers during the period from 2 to 3 days before planting until harvesting.

As a procedure for planting the chrysanthemum in the test area, first, a composite fertilizer containing phosphoric acid was applied to the soil of the test area, then, the first spraying of the nanobubble water with the sprinklers was conducted, the concentration of available phosphoric acid (phosphate ions) extracted from the soil was measured as described later, and then the chrysanthemum was planted. After the planting, illumination (illuminating the chrysanthemum with electric lighting devices) was started immediately. The illumination was performed day and night during the period as usual.

### (Customary Area)

In the customary area (comparative example), the chrysanthemum grown with artificial light was cultivated in the same manner as in the above-mentioned test area except that well water was used instead of the nanobubble water. The cultivation period in the customary area was from February 2, 2022 (planting day) to May 17, 2022 (harvesting day).

The frequency and amount of sprinkling were appropriately varied depending on the growth of the chrysanthemum grown with artificial light, the weather and other factors in accordance with a normal method, and were controlled to be generally the same in the test area and the customary area. The same applies to the illumination.

The well water used in the customary area is the same as the well water used for producing the nanobubble water in <Nanobubble water generation method> described later.

Details of the frequency and amount of sprinkling are as follows.
Test area: during the entire period from 2-3 days before the planting until the harvesting, the nanobubble water was sprayed over the test area 12 times in total (780 minutes in total in terms of the spraying time; 611 ml of the nanobubble water per strain of chrysanthemum grown with artificial light in total during the entire period). Customary area: during the entire period from 2-3 days before the planting until the harvesting, well water was sprinkled over the customary area 14 times in total (890 minutes in total in terms of spraying time; 697 ml of the well water per unit of chrysanthemum grown with artificial light in total during the entire period; the number of times of sprinkling of water in the customary area is slightly larger than that in the test area because their cultivation periods are different).

### <Nanobubble water generation method>

The nanobubble water was generated using a nanobubble generating apparatus [200V, 10 L/min type; manufactured by Kakuichi Co., Ltd., Aqua Solution Division (currently Aqua Solutions Corporation)] where bubbles (nanobubbles) were generated in water by the pressurized dissolution.

Water used to generate the nanobubble water was well water, and the gas used to form the bubbles was oxygen (industrial oxygen, oxygen concentration: 99.5 vol%).

The conditions for generation of nanobubbles using the above nanobubble generating apparatus were as follows.
* Number of bubbles per 1 mL of water: 5 x 10⁸ bubbles/mL
* Modal particle size of bubbles: 100 nm
* Zeta potential of bubbles: -35 mV

### <Evaluation of generation of phosphate ions>

In the test area and the customary area, the concentration of soluble phosphoric acid (available phosphoric acid) extracted from the soil was measured using the measurement device below for the soil before the planting (the day before the planting day), the soil on the lights-off day (the day when illumination on chrysanthemum with electric lighting was stopped), the soil on the adjustment day (the adjustment day is the day approximately one month before the harvesting day in the period from the lights-off to the harvesting), and the soil after the harvesting (the day after the harvesting day), in the procedure described below. After the lights-off, the chrysanthemum was irradiated with sunlight. In addition, the length of the chrysanthemum may be adjusted, and flowers may be bloomed during the period from the lights-off to the harvesting.

For the soil on the lights-off day and the soil on the adjustment day, the date on which each measurement was performed and the results of the measurement of the available phosphoric acid concentration (unit: mg/100 g dry soil) are shown in Table 1 below. In the "Customary area" space of Table 1 below, the upper row shows the dates, and the lower row shows the results of the measurement of the concentration of the available phosphoric acid. The same applies to the "Test area" space in Table 1 below.

### (Measurement device)

* Soil analyzer manufactured by Air Water Biodesign; product number: EW-THA1J (light absorption measurement performed by LED/photodetector)
* Analytical cartridge EW-T102J for soil analyzer EW-THA1J
* Component extracting solution: EW-T201J

### (Measurement procedure)

(1) Part of soil is collected, and the above-mentioned component extracting solution is added to the collected soil.
(2) Filtration is carried out using filter paper to recover a test liquid.
(3) The recovered test liquid is injected into the analytical cartridge and reacted with a reagent in the analytical cartridge.
(4) The concentration of the soluble phosphoric acid (available phosphoric acid) extracted from the soil by analysis is measured (calculated) by using the soil analyzer. In the present description, the above concentration is expressed in a unit "mg/100 g dry soil."

**[Table 1]**

| Table 1 | Lights-off day | Adjustment day |
|---|---|---|
| Customary area (well water sprayed) | 2022/3/25 | 2022/4/15 |
| | 114.7 | 96.7 |
| Test area (nanobubble water sprayed) | 2022/1/30 | 2022/2/28 |
| | 90.1 | 156.0 |

| | | |
|---|---|---|
| (Upper row showing date; unit of lower row: mg/100 g dry soil) | | |

### [Results in test area (present example)]

### * Generation of phosphate ions (available phosphoric acid) from poorly-soluble phosphoric acid

From the results shown in Table 1, in the test area where the nanobubble water was sprayed over the soil and the like, the amount of the available phosphoric acid extracted from the soil of the adjustment day was larger than that of the lights-off day in the middle of the cultivation of the plants.

### * Evaluation criterion for recyclability of poorly-soluble phosphoric acid

In the present invention, with respect to easy recycling of the poorly-soluble phosphoric acid in the soil (an object of the present invention), when the amount of the available phosphoric acid extracted from the soil after harvesting of the plants is smaller than the amount of the available phosphoric acid extracted from the soil before planting of the plants, easy recycling of the poorly-soluble phosphoric acid in the soil was evaluated to be possible.

In fact, the absorption (consumption) of the available phosphoric acid by plants during the cultivation of the plants has a large effect on the growth of the plants. In addition, since the available phosphoric acid is absorbed (consumed) by plants being cultivated and does not remain in the soil after cultivation, the risk that the phosphoric acid is immobilized in the soil (becomes poorly-soluble phosphoric acid) after the cultivation of the plants is finished and before the next plants are planted is reduced. This is advantageous.

### * Evaluation results of recyclability of poorly-soluble phosphoric acid in test area

In the test area, the amount of the available phosphoric acid extracted from the soil significantly decreased to the amount after the harvesting of the plants compared to the amount before the planting thereof. The reduction amount of the available phosphoric acid in the soil from the amount before the planting of the plants to the amount after the harvesting thereof was 27.9 mmg/100 g dry soil. As described above, in the test area, it was possible to easily recycle the poorly-soluble phosphoric acid in the soil. This (evaluation result of the recyclability of the poorly-soluble phosphoric acid in the test area) indicates that the plants absorbed phosphate ions during cultivation and decreased phosphoric acid (phosphate ions) in the soil. That is, it is considered that the above-described result indicates that the ionization of the poorly-soluble phosphoric acid proceeded by the spraying of the nanobubble water, and the plants being cultivated efficiently absorbed phosphate ions generated from the poorly-soluble phosphoric acid, thereby decreasing (consuming) the phosphate ions in the soil.

The above-described results (in particular, the great reduction in the available phosphoric acid extraction amount after harvesting compared to that before planting) of the present example (test area) described above were found to be a surprising phenomenon (effect) as described above.

From the above results, in the present invention, it can be considered that the nanobubble water directly acts on the poorly-soluble phosphoric acid in the soil to generate phosphate ions from the poorly-soluble phosphoric acid. In addition, according to the present invention, it is considered that the poorly-soluble phosphoric acid in the soil can be easily recycled.

In the case where the soil contains phosphoric acid as a fertilizer, since the phosphoric acid as a fertilizer may be ionized by the nanobubble water together with the ionization of the poorly-soluble phosphoric acid by the nanobubble water, the plant being cultivated can further absorb phosphate ions generated from the phosphoric acid as a fertilizer owing to the nanobubble water, so this case is preferable.

### [Results in customary area (comparative example)]

On the other hand, in the customary area in which the well water was sprayed over soil and the like instead of the nanobubble water, the amount of the available phosphoric acid extracted from the soil of the adjustment day was smaller than that of the lights-off day in the middle of the cultivation of the plants.

Since no nanobubble water was sprayed over the customary area, the above evaluation result in the customary area does not correspond to the method of utilizing poorly-soluble phosphoric acid according to the present invention.

In addition, the above result (i.e., the result that the amount of the available phosphoric acid extracted from the soil of the adjustment day was smaller than that of the lights-off day) in the customary area does not satisfy "generation of phosphate ions from the poorly-soluble phosphoric acid by the nanobubble water" in the method of utilizing poorly-soluble phosphoric acid according to the present invention. In the customary area and the test area, it is considered that phosphate ions are generated from the poorly-soluble phosphoric acid due to the effect of a root acid or the like, as is conventionally known.

It is presumed to indicate that in the soil of the customary area on the lights-off day certain days after the planting day, at least a part of the phosphoric acid applied as a composite fertilizer as described above becomes the poorly-soluble phosphoric acid, and even when the well water is sprayed over the soil in the customary area under the situation where the amount of the poorly-soluble phosphoric acid is larger than that of the soil before the planting day as described above, it is difficult to generate phosphate ions from the poorly-soluble phosphoric acid in the soil.

The reason why the amount of the available phosphoric acid extracted from the soil of the adjustment day was smaller than that of the lights-off day in the customary area is probably that it was difficult for the soil in the customary area to generate phosphate ions from the poorly-soluble phosphoric acid in the soil as described above, and further, the plant absorbed phosphate ions from the soil under such a situation where phosphate ions were few.

### * Evaluation results of recyclability of poorly-soluble phosphoric acid in customary area

In the customary area, the amount of the available phosphoric acid extracted from the soil after the harvesting of the plants was significantly larger than that before the planting of the plants. The increased amount of available phosphoric acid in the soil from the amount before planting of the plants to the amount after the harvesting thereof was 128.6 mmg/100 g dry soil. As described above, in the customary area, poorly-soluble phosphoric acid in the soil could not be recycled.

The reason why the amount of the available phosphoric acid extracted from the soil after the harvesting of the plants was significantly larger than that before the planting of the plants in the customary area where no nanobubble water was sprayed is probably due to the effect of the plants, such as the action of the root acid secreted from the plants (acid secreted from the roots). The poorly-soluble phosphoric acid can produce phosphate ions, for example, by means of a root acid, as described above.

However, since the plants were planted in the same way in both the customary area and the test area, it was a surprising result that even when the effect of the plants was present, the amount of the available phosphoric acid extracted from the soil after the harvesting of the plants was significantly larger than that before the planting of the plants (i.e., phosphate ions remained in the soil after the harvesting as compared to those before the planting) in the customary area where no nanobubble water was sprayed, and conversely, the amount of the available phosphoric acid extracted from the soil after the harvesting of the plants was significantly smaller than that before the planting of the plants in the test area where the nanobubble water was sprayed.

In the test area, the amount of the available phosphoric acid extracted from the soil greatly reduced from before the planting of the plants to after the harvesting thereof, and the amount of the available phosphoric acid extracted from the soil on the adjustment day was larger than the amount of the available phosphoric acid extracted from the soil on the lights-off day. The reason for this is considered as follows.

First, regarding the fact that the amount of the available phosphoric acid extracted from the soil greatly reduced from before the planting of the plants to after the harvesting thereof in the test area, it was considered that in the test area, the change of the poorly-soluble phosphoric acid into the available form (generation of phosphate ions) in the soil was accelerated by the spraying of the nanobubble water during the period from before the planting to the harvesting time, and the amount of phosphate ions in the soil quickly increased from the amount before spraying of the nanobubble water to the amount after the spraying of the nanobubble water at each spraying during the period from before the planting to the time of harvesting. It was also presumed that the change of the poorly-soluble phosphoric acid into the available form by the nanobubble water was faster than that by root acid or the like.

The plants rapidly absorb phosphate ions thus formed in the soil, and hence, the phosphate ions in the soil decrease. In particular, during the period that the plants significantly grow (e.g., the period during which buds of the plants grow; after the adjustment day in this description), the plants need to absorb many phosphate ions as a fertilizer component.

As described above, it is considered that, in the test area, a sequence of processes of spraying of the nanobubble water, generation of phosphate ions, and absorption of phosphate ions by the plants was repeated every time the nanobubble water was sprayed during the period from before the planting to the time of harvesting, whereby the amount of the available phosphoric acid extracted from the soil significantly decreased from the amount before the planting of the plants to the amount after the harvesting thereof.

Regarding the fact that the amount of the available phosphoric acid extracted from the soil on the adjustment day was larger than the amount of the available phosphoric acid extracted from the soil on the lights-off day in the test area, it is considered as follows: while phosphoric acid ions were generated by spraying of the nanobubble water as described above also during the period from the lights-off day to the adjustment day, the amount of phosphoric acid ions absorbed by the plants was relatively small during the period from the lights-off day to the adjustment day as compared to that during the period from the adjustment day to the harvesting day (during this period, buds of plants grow), and therefore, the amount of the available phosphoric acid on the adjustment day was significantly larger than the amount of the available phosphoric acid on the lights-off day. In addition, in view of the fact that the absorption of phosphate ions by the plants is relatively small during the period from the lights-off day to the adjustment day, the above results are considered to prove that phosphate ions are generated by spraying of the nanobubble water.

In addition, from the result shown in Table. 1 that the amount of the available phosphoric acid extracted from the soil on the adjustment day was larger than the amount of the available phosphoric acid extracted from the soil on the lights-off day in the test area, it can be inferred that the phosphate ions generated by the spraying of the nanobubble water and remaining after being absorbed by the plants did not return to the poorly-soluble phosphoric acid in the soil again and were accumulated in the soil as phosphate ions.

Then, the plants absorbed a large amount of phosphate ions in the soil of the adjustment day and phosphate ions generated each time the nanobubble water was sprayed during the period from the adjustment day to the harvesting day, their buds grew, and the plants were harvested; as described above, when compared before the planting of the plants and after the harvesting thereof in the test area, the amount of the available phosphoric acid extracted from the soil was greatly reduced during the period from before the planting of the plants to after the harvesting thereof.

On the other hand, when the above phenomenon obtained by viewing the cultivation of the plants in the customary area as a whole (that is, as the period from before the planting of the plants to after the harvesting of the plants) is considered in view of another finding than the above, that is, the finding that an aluminum component in the soil is more easily ionized by purified water than by the nanobubble water (however, since purified water does not directly act on the poorly-soluble phosphoric acid such as aluminum phosphate in the soil to ionize the poorly-soluble phosphoric acid, aluminum ions extracted from the soil containing purified water do not include aluminum ions generated by the direct action of the purified water on aluminum phosphate which is one type of aluminum component among overall aluminum components contained in the soil), there appears to be an aspect that in the customary area, aluminum ions in the soil increase by spraying of the well water over the soil and the like, and the thus increased aluminum ions are bonded to phosphate ions, resulting in an increase in poorly-soluble phosphoric acid (phosphate ions present in the soil tend to bind to aluminum ions generated from aluminum components (excluding aluminum phosphate) owing to simple water and thereby be immobilized).

### (Dissolution characteristics of metal components in soil with respect to nanobubble water and purified water)

In the present invention, the following findings have also been obtained regarding the dissolution characteristics of metal components in the soil with respect to the nanobubble water and purified water.

From the analysis of the dissolution characteristics of metal components in the soil with respect to the nanobubble water and purified water, the result was obtained in which an aluminum component in the soil was more easily ionized by purified water than by the nanobubble water (that is, the nanobubble water less easily ionizes the aluminum component in the soil as compared to the purified water).

From the above result, it was considered that when the nanobubble water was sprayed over the soil in which the phosphoric acid and the aluminum component were present, aluminum ions were less easily generated from the aluminum component as compared to the case where simple water was sprayed, and thus, aluminum phosphate, which was one type of the poorly-soluble phosphoric acid, was also less easily generated; therefore, by spraying the nanobubble water over the soil, the generation of the aluminum phosphate could be suppressed.

Details of the analysis of the dissolution characteristics of metal components in the soil with respect to the nanobubble water and purified water as described above are as follows.

Thirty kinds of soil (andosol) were used for the above analysis.

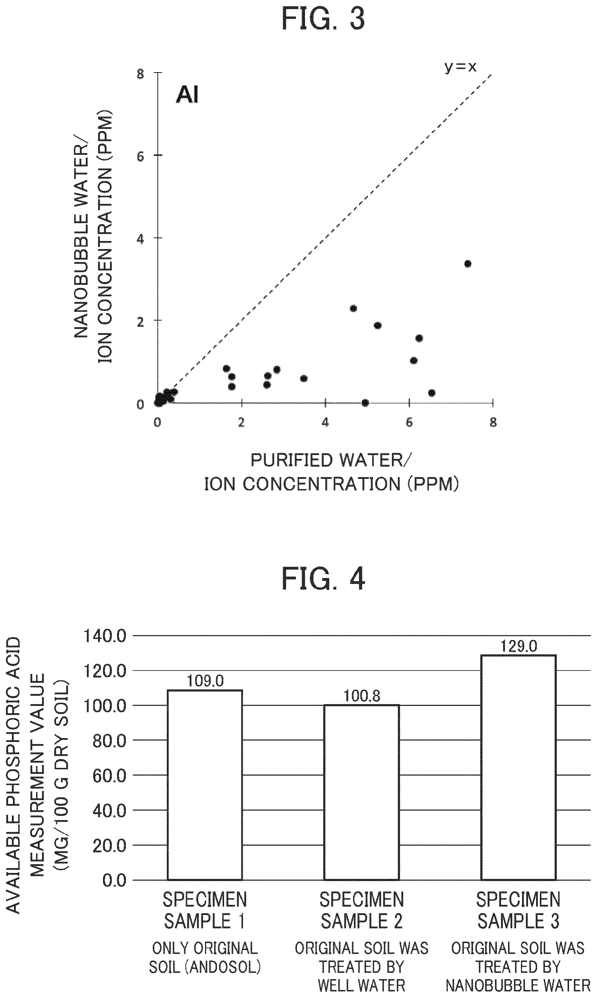

First, 3 g of each soil sample (andosol) and 30 ml of nanobubble water or simple purified water were placed in a container, the mixture was stirred at the condition of 25°C for 60 minutes, then filtered, and the resultant filtrate was analyzed for the concentration (ppm) of ions of each metal contained in the filtrate using "ICPS-8100" manufactured by Shimadzu Corporation or "MP-AES" manufactured by Agilent Technology. The results of the analysis were expressed as a graph obtained by plotting the concentration of extracted ions of each metal with respect to the nanobubble water or the purified water in each soil (FIGS. 2 and 3). The nanobubble water used in the above-described analysis was generated in the same manner as the nanobubble water used in the test area of the present example, except that another well water was used. The purified water used in the above-described analysis was distilled water. The above thirty kinds of soil are agricultural soil samples having different cultivation histories, fertilization managements, and land use forms.

As a result of the above analysis, the amount of the aluminum ions extracted from the soil containing the nanobubble water was smaller than the extracted amount from the soil containing the simple purified water (see FIG. 3).

FIG. 3 is a graph showing dissolution characteristics of the aluminum components in the soil. In FIG. 3, when a plot is present in a region above the dashed line with the dashed line representing y = x as a boundary, this means that the extracted amount of the aluminum ions is larger in the case of the nanobubble water than in the case of the purified water. On the other hand, in FIG. 3, when a plot is present in a region below the dashed line with the dashed line representing y = x as a boundary, this means that the amount of the aluminum ions is larger in the case of the purified water than in the case of the nanobubble water.

FIG. 3 is considered to show that the aluminum component in the soil is less easily to be ionized by the nanobubble water than by the purified water.

In the evaluation of "(Dissolution characteristics of metal components in soil with respect to nanobubble water and purified water)" described above, since the purified water does not directly act on the poorly-soluble phosphoric acid such as aluminum phosphate in the soil to ionize the poorly-soluble phosphoric acid, it can be considered that aluminum ions extracted from the soil containing the purified water do not include aluminum ions generated by the direct action of the purified water on the aluminum phosphate which is one type of aluminum component among overall aluminum components in the soil. On the other hand, since the nanobubble water can directly act on the poorly-soluble phosphoric acid in the soil to ionize the poorly-soluble phosphoric acid (to generate phosphate ions), aluminum ions extracted from the soil containing the nanobubble water can include aluminum ions generated by the direct action of the nanobubble water on the aluminum phosphate among overall aluminum components contained in the soil.

On the other hand, the amount of the metal ions other than the aluminum ions (e.g., calcium ions) extracted from the soil containing the nanobubble water was larger than the extracted amount from the soil containing the simple purified water (see FIG. 2).

FIG. 2 is a graph showing the dissolution characteristics of the calcium component in the soil. In FIG. 2, when a plot is present in a region above the dashed line with the dashed line representing y = x as a boundary, this means that the extracted amount of calcium ions is larger in the case of the nanobubble water than in the case of the purified water. On the other hand, in FIG. 2, when a plot is present in a region below the dashed line with the dashed line representing y = x as a boundary, this means that the extracted amount of the calcium ions is larger in the case of the purified water than in the case of the nanobubble water.

FIG. 2 is considered to show that the calcium component in the soil is more easily ionized by the nanobubble water than by the purified water.

In the evaluation of "(Dissolution characteristics of metal components in soil to nanobubble water and purified water)" described above, since the purified water does not directly act on the poorly-soluble phosphoric acid such as calcium phosphate in the soil to ionize the poorly-soluble phosphoric acid, it can be considered that calcium ions extracted from the soil containing the purified water do not include calcium ions generated by the direct action of the purified water on the calcium phosphate which is one type of calcium component among overall calcium components in the soil. On the other hand, since the nanobubble water can directly act on the poorly-soluble phosphoric acid in the soil to ionize the poorly-soluble phosphoric acid (to generate phosphate ions), calcium ions extracted from the soil containing the nanobubble water can include calcium ions generated by the direct action of the nanobubble water on the calcium phosphate among overall aluminum components contained in the soil.

As described above, in view of the result that the aluminum components in the soil (overall aluminum components contained in the soil) are less easily ionized by the nanobubble water than by the purified water, it is considered that the generation of the aluminum phosphate can be suppressed by spraying of the nanobubble water over the soil. According to the present invention, the nanobubble water can ionize the poorly-soluble phosphoric acid in the soil (generate phosphate ions).

### (Generation of phosphate ions from poorly-soluble phosphoric acid by means of nanobubble water under condition of no plants)

In the present invention, the following findings have been obtained on the generation of phosphate ions (available phosphoric acid) from the poorly-soluble phosphoric acid in the soil by spraying of the nanobubble water over the soil under the condition of no plants.

In general, it is said that phosphate ions are generated from poorly-soluble phosphoric acid due to the effect of the plants (such as the action of root acids secreted from the plants) as described above. Therefore, in this experiment, the following evaluation has been made for the generation of phosphate ions (available phosphoric acid) from the poorly-soluble phosphoric acid in the soil by spraying of the nanobubble water or the like over the soil under the condition that the effect of the plants was excluded.

To the soil used in the present experiment "(Generation of phosphate ions from poorly-soluble phosphoric acid by means of nanobubble water under condition of no plants)," the phosphoric acid as a fertilizer was applied three months before the soil was collected, and then the plants were cultivated in the soil and harvested; however, in carrying out this experiment, the phosphoric acid as a fertilizer was not applied to the soil immediately before the soil was collected. Therefore, since the soil used in this experiment contains the poorly-soluble phosphoric acid but does not substantially contain the phosphoric acid as a fertilizer, the effect of the phosphoric acid as a fertilizer is also substantially eliminated in this experiment.

### 1. Experiment materials and method

### (1) Generation of nanobubble water

Nanobubble water was generated in the same manner as in the above-described <Nanobubble water generation method>.

### (2) Specimen samples 1, 2, 3

### * Specimen sample 1 (original soil)

Specimen Sample 1 (500 mg of andosol) was collected from the agricultural field prior to planting and irrigation with nanobubble water. This is also referred to as "original soil."

### * Specimen sample 2 (original soil + well water)

Well water was sprinkled at a mass ratio (sample soil : sprinkling amount of well water) of 1 : 1 over the original soil (500 mg of andosol) similar to that of the specimen sample 1 (i.e., 500 mg of the well water was added to 500 mg of the original soil) and dried at low temperature (natural drying in the shade of a room (about 20°C)), followed by bacterial culture treatment (treatment in which the original soil to which the well water was added was wrapped in aluminum foil and stored for 30 days at room temperature in the dark), thereby obtaining a specimen sample with the well water sprayed (specimen sample 2). The well water used in the specimen sample 2 is the same as the well water used in generating the nanobubble water used in the specimen sample 3 below.

### * Specimen sample 3 (original soil + nanobubble water)

Nanobubble water generated as described above was sprinkled at a mass ratio (sample soil : sprinkling amount of nanobubble water) = 1 : 1 over the original soil (500 mg of andosol) similar to that of the specimen sample 1 (i.e., 500 mg of the nanobubble water was added to 500 mg of the original soil) and dried at low temperature (natural drying in the shade of a room (about 20°C)), followed by bacterial culture treatment (treatment in which the original soil to which the nanobubble water was added was wrapped in aluminum foil and stored for 30 days at room temperature in the dark), thereby obtaining a specimen sample with the nanobubble water sprayed (specimen sample 3).

### (3) Measurement of phosphoric ions

According to the same measuring procedure as the above-described (Measuring procedure), the concentration of the soluble phosphoric acid (available phosphoric acid) was measured (calculated) using the same measurement device as the above-described (Measurement device) used in the above-described <Evaluation of generation of phosphate ions> for each of the specimen samples 1 to 3 described above. The results are shown below.

### 2. Experimental results

The results of the measurement of the concentration of the soluble phosphoric acid (available phosphoric acid) in the specimen samples 1 to 3 were as follows.
* Specimen sample 1 (only original soil): 109.0 mg/100 g dry soil
* Specimen sample 2 (specimen sample obtained by spraying well water over original soil): 100.8 mg/100 g dry soil
* Specimen sample 3 (specimen sample obtained by spraying nanobubble water over original soil): 129.0 mg/100 g dry soil

The results are also shown in the graph of FIG. 4. FIG. 4 is a graph showing the measurement results of the amounts (concentrations) of phosphate ions having been changed into an available form from poorly-soluble phosphoric acid in soil after well water or nanobubble was sprayed over the soil where no plant was planted.

### 3. Conclusion

In the above results, the amount (concentration) of the available phosphoric acid in the specimen sample 2 in which the well water was sprayed over the soil under the condition that no plant was planted was smaller than the amount (concentration) of the available phosphoric acid in the specimen sample 1 of only the soil under the condition that no plant was planted and with no well water or the like being sprayed. This is probably because a part of the available phosphoric acid present in the original soil before the well water was added in the specimen sample 2 was immobilized (and became the poorly-soluble phosphoric acid) after the well water was added, and as a consequence, the part of the available phosphoric acid was not detected as the available phosphoric acid.

On the other hand, it was found that the amount (concentration) of the available phosphoric acid in the specimen sample 3 in which the nanobubble water was sprayed over the soil under the condition that no plant was planted was larger than those in the specimen samples 1 and 2.

From the above results, it was found that even in the absence of the effect of the plants (e.g., the change of the poorly-soluble phosphoric acid into phosphate ions in the available form due to, for instance, the action of the root acid secreted from the plants), the poorly-soluble phosphoric acid in the soil is made available and becomes the phosphate ions by spraying the nanobubble water over the soil.

The above results are believed to demonstrate that the nanobubble water can directly act on the poorly-soluble phosphoric acid in the soil to generate phosphate ions from the poorly-soluble phosphoric acid.

Based on the above results, it is considered that even when the plants are planted in the soil as in the test area, by spraying the nanobubble water over the soil, the nanobubble water can directly act on the poorly-soluble phosphoric acid in the soil to generate phosphate ions from the poorly-soluble phosphoric acid not only during the period from the lights-off day to the adjustment day in the test area but also during the period from before the planting to after the harvesting in the test area. On the other hand, it is considered that even when simple water such as well water is sprayed over the soil where the plants are planted in the soil as in the customary area, phosphate ions cannot be generated directly from the poorly-soluble phosphoric acid in the soil by the simple water such as well water during the period from before the planting to after the harvesting in the customary area.

### REFERENCE SIGNS LIST

- 10: nanobubble generating apparatus
- 30: liquid discharger
- 40: gas incorporating device
- 41: vessel
- 42: gas incorporating device body
- 50: nanobubble generating nozzle

## Claims

1. A method of utilizing poorly-soluble phosphoric acid, the method effectively utilizing poorly-soluble phosphoric acid in soil, **characterized in that**
nanobubble water is sprayed over soil containing poorly-soluble phosphoric acid to generate phosphate ions from the poorly-soluble phosphoric acid by means of the nanobubble water.

2. The method of utilizing poorly-soluble phosphoric acid according to claim 1, wherein the soil further contains an iron component and/or an aluminum component.

3. The method of utilizing poorly-soluble phosphoric acid according to claim 1, wherein the poorly-soluble phosphoric acid contains iron phosphate.

4. The method of utilizing poorly-soluble phosphoric acid according to claim 1, wherein the nanobubble water contains bubbles with a modal particle size of from 10 to 500 nm.

5. The method of utilizing poorly-soluble phosphoric acid according to claim 1, wherein bubbles contained in the nanobubble water include at least one type of gas selected from the group consisting of air, oxygen, nitrogen, carbon dioxide, hydrogen and ozone,
where including oxygen, nitrogen, carbon dioxide or hydrogen means including oxygen, nitrogen, carbon dioxide or hydrogen at a higher concentration than the concentration in air.

6. The method of utilizing poorly-soluble phosphoric acid according to claim 1, wherein the nanobubble water contains bubbles in an amount of from 1 x 10⁸ to 1 x 10¹⁰ bubbles/mL.

7. The method of utilizing poorly-soluble phosphoric acid according to claim 1, wherein the nanobubble water contains bubbles with a zeta potential of -50 mV to -30 mV.

8. The method of utilizing poorly-soluble phosphoric acid according to claim 1, wherein the nanobubble water is sprayed over the soil a plurality of times.

9. A method of cultivating a plant, comprising:
cultivating a plant in soil to which the method of utilizing poorly-soluble phosphoric acid according to any one of claims 1 to 8 is applied.
